# EUROPÄISCHE PATENTANMELDUNG

(11) **EP 1 147 956 A2**
(43) Veröffentlichungstag der Anmeldung: **24.10.2001**
(21) Anmeldenummer: 01108346.6
(22) Anmeldetag: 03.04.2001
(51) Int. Cl.: B60S 1/48

(54) **Reinigungsanlage für Scheiben**

(30) Priorität: 19.04.2000 DE 10019283
(71) Anmelder: Hella KG Hueck & Co., 59552 Lippstadt (DE)
(72) Erfinder: Orth, Peter, 59557 Lippstadt (DE); Thorn, Martin, 59510 Lippetal-Herzfeld (DE)

(57) **Zusammenfassung**

Die Erfindung betrifft eine Reinigungsanlage für Scheiben, insbesondere für Scheiben von Scheinwerfern für Kraftfahrzeuge mit einer Pumpe zum Fördern einer Reinigungsflüssigkeit zu mindestens zwei jeweils im Bereich der Scheiben angeordneten Düsen und mit einem einen Einlass und mindestens zwei Auslässe aufweisenden Ventil, das in einem Zylinder einen axialbeweglichen Stellkolben aufweist, der mit einer Feder zusammenwirkt, dessen Federkraft eine Bewegung des Stellkolbens in Folge der Betätigung der Pumpe entgegenwirkt, wobei ein erster Stellkolben und ein zweiter Stellkolben über ein Koppelelement miteinander verbunden sind, dass ein einen Druckraum begrenzendes Dichtelement verschieblich zu dem Koppelelement gelagert ist, dass der erste und/oder zweite Stellkolben jeweils über ein Federelement gegenüber dem Dichtelement abgestützt sind und dass der Einlass in einem solchen Bereich des Zylinders angeordnet ist, dass bei Druckbeaufschlagung des Zylinders eine Stellkraft auf den ersten und/oder zweiten Stellkolben und das Dichtelement wirkt und dass mit Erzeugen einer den ersten Stellkolben und/oder zweiten Stellkolben verschiebende Stellkraft das den ersten Stellkolben und/oder zweiten Stellkolben zugeordnete Federelement derart gespannt wird, dass es auf das Dichtelement mit einer Nachführkraft wirkt, die kleiner als die auf das Dichtelement wirkende Stellkraft und entgegengesetzt zu derselben gerichtet ist.

## Beschreibung

Die Erfindung betrifft eine Reinigungsanlage für Scheiben, insbesondere Scheiben von Scheinwerfern für Kraftfahrzeuge, mit einer Pumpe zum Fördern einer Reinigungsflüssigkeit zu mindestens zwei jeweils im Bereich der Scheiben angeordneten Düsen und mit einem einen Einlass und mindestens zwei Auslässe aufweisenden Ventil, das in einem Zylinder einen axialbeweglichen Stellkolben aufweist, der mit einer Feder zusammenwirkt, dessen Federkraft einer Bewegung des Stellkolbens in Folge der Betätigung der Pumpe entgegenwirkt.

Aus der EP 0 782 946 B1 ist eine Reinigungsanlage für Scheiben mit einem Ventil bekannt, das einen einfach wirkenden Zylinder mit einem Stellkolben vorsieht, der bei Druckbeaufschlagung entgegen einer Federkraft verschoben wird. Der Stellkolben ist mit einer Kolbenstange verbunden, die in einem gesonderten Raum des Ventils eine Öffnung aufweist, so dass sie bei axialer Bewegung der Kolbenstange nacheinander mindestens zwei Auslässe des Ventils überstreicht. Die Auslässe sind jeweils mit Leitungen verbunden, die zu unterschiedlichen jeweils einem Scheinwerfer zugeordnete Düsen führen. Auf diese Weise kann die mittels einer Pumpe zu dem Einlass geförderte Reinigungsflüssigkeit zeitversetzt den Scheiben der Scheinwerfer zugeführt werden. Nach Abschalten der Pumpe ermöglicht die in der Rückstellfeder gespeicherte Federenergie eine selbsttätige Rückwärtsbewegung des Stellkolbens in seine Ausgangslage.

Nachteilig an der bekannte Reinigungsanlage ist, dass das Ventil recht voluminös und konstruktiv aufwendig ausgestaltet ist. Es sind mehrere Druckräume und verzweigte Flüssigkeitskanäle notwendig. Eine Ausgleichsdrossel ist zum Druckausgleich bei der Rückwärtsbewegung des Stellkolbens erforderlich. Ferner verhindert das Ventil einen Rücklauf von Reinigungsflüssigkeit bei Ansteuerung eines die Düse tragenden Teleskoparmes mittels der Reinigungsflüssigkeit.

Aufgabe der vorliegenden Erfindung ist es daher, eine Reinigungsanlage für Scheiben derart weiterzubilden, dass auf einfache Weise eine schnell wechselnde Ansteuerung von Düsen ermöglicht wird.

Zur Lösung dieser Aufgabe ist die Erfindung in Verbindung mit dem Oberbegriff des Patentanspruchs 1 dadurch gekennzeichnet, dass ein erster Stellkolben und ein zweiter Stellkolben über ein Koppelelement miteinander verbunden sind, dass ein einen Druckraum begrenzendes Dichtelement verschieblich zu dem Koppelelement gelagert ist, dass der erste und/oder zweite Stellkolben jeweils über ein Federelement gegenüber dem Dichtelement abgestützt ist, dass der Einlass in einem solchen Bereich des Zylinders angeordnet ist, dass bei Druckbeaufschlagung des Zylinders eine Stellkraft auf den ersten und/oder zweiten Stellkolben und das Dichtelement wirkt, und dass mit Erzeugen einer den ersten Stellkolben und/oder zweiten Stellkolben verschiebende Stellkraft das den ersten Stellkolben und/oder zweiten Stellkolben zugeordnete Federelement derart gespannt wird, dass es nach dem Nichtanliegen der Stellkraft auf das Dichtelement mit einer Nachführkraft wirkt, die kleiner als die auf das Dichtelement wirkende Stellkraft und entgegengesetzt zu derselben gerichtet ist.

Der besondere Vorteil der Erfindung besteht darin, dass ein den jeweiligen Druckraum festlegendes und denselben begrenzendes Dichtelement stets vorgespannt ist und während der Druckbeaufschlagung des Einlasses unbeweglich angeordnet ist. Auf diese Weise kann ein sicherer und relativ kurzer Förderweg durch das Ventil ermöglicht werden. Während der Druckbeaufschlagung des Ventils erfolgt lediglich die Verschiebung eines Stellkolbens, der keinen Einfluss auf den Förderweg ausübt. In Verbindung mit einem Federelement dient der Stellkolben dazu, eine Nachführkraft aufzubauen, die nach Beendigung der Druckbeaufschlagung dafür sorgt, dass das Dichtelement eine andere, einen zweiten Förderweg freigebende Endlage einnimmt. Vorteilhaft wird erst nach dem Abschalten der Pumpe das Dichtelement bewegt, so dass der Förderweg unabhängig von dem Pumpendruck ist.

Nach einer besonderen Ausführungsform der Erfindung ist ein die Stellkolben verbindendes Koppelelement als Kolbenstange ausgebildet, wobei die beiden gegenüberliegenden Stellkolben starr miteinander verbunden sind. Auf diese Weise ist das Ventil kompakt und platzsparend ausgebildet.

Vorteilhaft erstrecken sich jeweils zwischen den Stellkolben einerseits und dem Dichtelement andererseits Federelemente, die sich in ihrer Federkraft unterstützen. Auf diese Weise kann das Ventil besonders betriebssicher ausgestaltet sein.

Nach einer Weiterbildung der Erfindung sind zwei Federelemente vorgesehen, die sich zu beiden Seiten des Dichtelementes erstrecken und zum einen an dem Dichtelement und zum anderen an dem jeweiligen Stellkolben abgestützt sind. In einer Endstellung des Dichtelementes bzw. der Stellkolben ist eines der Federelemente in einem gespannten und ein anderes Federelement im entspannten Zustand. Die Federkraft des gespannten Federelementes ist kleiner als die Stellkraft der durch den Pumpendruck bewirkten Reinigungsflüssigkeit.

Vorteilhaft ist das Dichtelement zwischen den beiden Stellkolben angeordnet und durch die Kolbenstange geführt. Das Ventil weist hierdurch einen besonders einfachen konstruktiven Aufbau auf.

Nach einer Weiterbildung der Erfindung ist das Dichtelement in einem mittleren Verbreitungsabschnitt des Zylinder angeordnet. Der Einlass ist in einem axialen Abstand zu den Auslässen angeordnet, wobei die Mittelachse des Einlasses zwischen den Mittelachsen der Auslässe angeordnet ist. Der Stellweg des Dichtelementes kann hierdurch klein und symmetrisch gehalten werden.

Nach einer Weiterbildung der Erfindung weisen die Stellkolben eine unterschiedliche wirksame Stellfläche auf, so dass ein in Betrieb setzen des Ventils auch bei nicht in Endstellung befindlichen Dichtelement ermöglicht wird.

Ein Ausführungsbeispiel der Erfindung wird nachfolgend anhand der Zeichnungen näher erläutert.

Es zeigen:
- Figur 1: ein Blockschaltbild einer erfindungsgemäßen Reinigungsanlage,
- Figur 2: ein schematischer Längsschnitt durch ein erfindungsgemäßes Ventil in einer ersten Ruheposition,
- Figur 3: ein schematischer Längsschnitt durch das Ventil in einer ersten Ar- beitsposition,
- Figur 4: ein schematischer Längsschnitt durch das Ventil in einer zweiten Ruheposition und
- Figur 5: ein schematischer Längsschnitt durch das Ventil in einer zweiten Arbeitsposition.

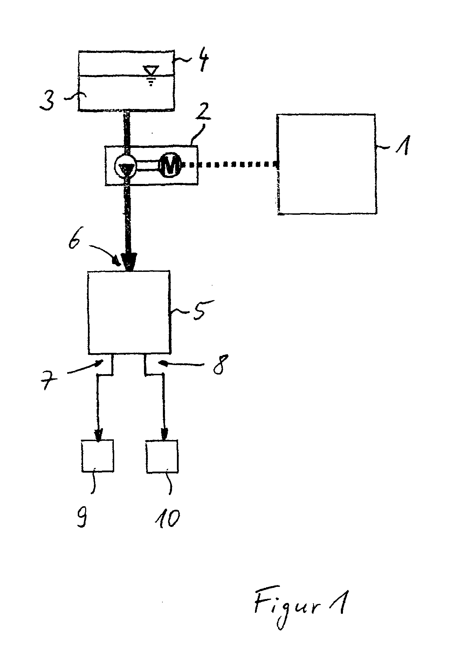

In Figur 1 ist schematisch eine Reinigungsanlage für Scheinwerfer eines Kraftfahrzeugs dargestellt, die im Wesentlichen besteht aus einer Steuereinheit 1, einer Pumpe 2, einem als Reservoir für eine Reinigungsflüssigkeit 3 dienender Vorratsbehälter 4, einem der Pumpe 2 nachgeordnetes Ventil 5, das einen Einlass 6 und zwei Auslässe 7 und 8 aufweist, die jeweils zu einer unterschiedlichen Scheinwerfern zugeordneten Düse 9 und 10 verbunden sind.

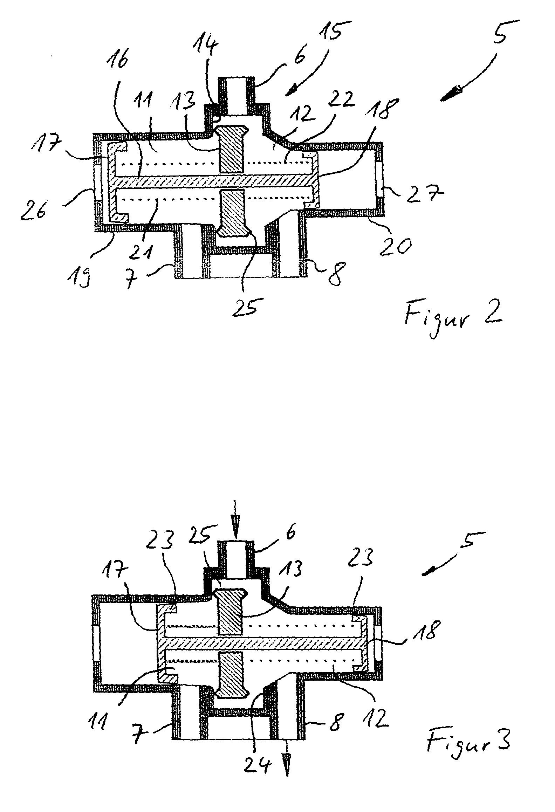

In einer ersten Ruheposition des Ventils 5 gemäß Figur 2 kann ein einem ersten Druckraum 11 von einem zweiten Druckraum 12 trennendes Dichtelement 13 an einer ersten Radialwandung 14 eines mittleren Verbreiterungsabschnitt 15 des zylinderförmigen Ventils 5 anliegen. Das tellerförmig ausgebildete Dichtelement 13 ist koaxial zu einem als Kolbenstange 16 ausgebildeten Koppelelement angeordnet. Das Dichtelement 13 ist längsverschieblich zu der Kolbenstange 16 angeordnet. Die Kolbenstange 16 weist an einem ersten Ende einen großen Stellkolben 17 und an einem gegenüberliegenden Ende einen kleinen Stellkolben 18 auf. Die Außendurchmesser der Stellkolben 17 und 18 entsprechen im Wesentlichen dem Innendurchmesser der entsprechenden Zylinderabschnitte 19 bzw. 20. Zwischen dem großen Stellkolben 17 und dem Dichtelement 13 ist ein erstes Federelement 21 angeordnet. Zwischen dem kleinen Stellkolben 18 und dem Dichtelement 13 ist ein zweites Federelement 22 angeordnet. Die Federelemente 21 und 22 sind als Schraubenfedern ausgebildet. Das Federelement 21 befindet sich in einem im Wesentlichen entspannten Zustand. Das Federelement 22 befindet sich in einem im Wesentlichen gespannten Zustand.

Die Stellkolben 17 und 18 befinden sich in der ersten Ruheposition gemäß Figur 2 ist einer festsitzenden Endlage. Der Festsitz wird durch eine reibschlüssige Anlage der Stellkolben 17 und 18 an den inneren Mantelflächen der Zylinderabschnitte 19 bzw. 20 ermöglicht. Zu diesem Zweck weisen die Stellkolben 17 und 18 jeweils tellerförmige Randstege 23 auf, die mit einer umlaufenden Randkante gegen die Innenseite der Zylinderabschnitte 19, 20 drücken. Vorzugsweise sind die Federelemente 21 und 22 derart ausgelegt, dass das Dichtelement 13 durch das in dem freigeschalteten Förderweg liegende Federelement 21, 22 gegen die entsprechende erste Radialwandung 14 oder gegen eine zweite Radialwandung 24 gedrückt wird. In der ersten Ruheposition gemäß Figur 2 ist das zweite Federelement 22 und in der zweiten Ruheposition gemäß Figur 4 ist das erste Federelement 21 leicht gespannt, so dass die dadurch aufgebrachte Federkraft für eine eindeutige Positionierung des Dichtelementes 13 sorgt.

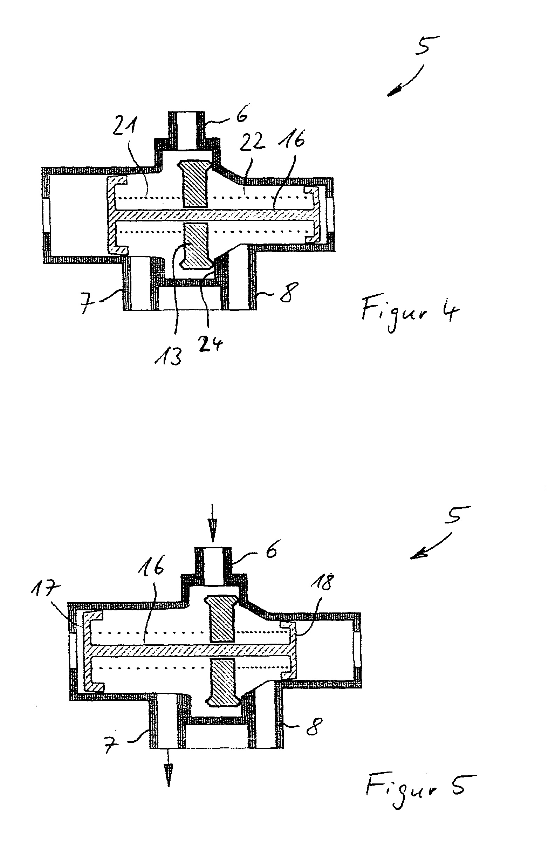

Zur Betätigung einer ersten Düse 10 wird die Pumpe 2 eingeschaltet, so dass entsprechend Figur 3 der Einlass 6 mit einer Reinigungsflüssigkeit vorgegebenen Drucks beaufschlagt wird. Durch die Druckbeaufschlagung des zweiten Druckraums 12 wird das Dichtelement 13 noch stärker gegen die erste Radialwandung 14 gedrückt. Gleichzeitig wird die Reinigungsflüssigkeit durch den zweiten Auslass 8 in Richtung der Düse 10 geleitet. Mit Aufbau des Drucks in dem zweiten Druckraum 12 erfolgt eine axiale Verschiebung des kleinen Stellkolbens 18 bis in einem geschlossenen Stellbereich des Zylinderabschnitts 20. Gleichzeitig wird der große Stellkolben 17 in die gleiche Richtung bewegt, wobei das erste Federelement 21 gestaucht und das zweite Federelement 22 gedehnt wird. Die durch die Stauchung des ersten Federelementes 21 erzeugte Federkraft ist kleiner als die in dem vom zweiten Druckraum 12 auf das Dichtelement 13 wirkende Haltekraft. Somit ist das Dichtelement 13 unverrückbar in der ersten Arbeitsposition angeordnet.

Nach Abschalten der Pumpe 2 und schlagartigem Druckabfall in dem zweiten Druckraum 12 wird das Dichtelement 13 durch die in dem ersten Federelement 21 gespeicherten Federenergie in Richtung des kleinen Stellkolbens 18 nachgeführt, bis das Dichtelement 13 an einer zweiten Radialwandung 24 des mittleren Verbreitungsabschnittes 15 zur Anlage kommt, siehe Figur 4. In dieser Position kann das erste Federelement 21 noch gespannt sein. Zur Sicherung des Dichtelementes 13 in dieser Endlage ist die reibschlüssige Anlage der Randstege 23 des großen und/kleinen Stellkolbens 17, 18 an den Innenflächen der Zylinderabschnitte 19, 20 derart gewählt, dass das erste Federelement 21 noch gespannt ist zum Aufbringen der entsprechenden Haltekraft des Dichtelementes 13 an der zweiten Radialwandung 24.

Beim nächsten Einschalten der Pumpe 2 ergibt sich nun ein Förderweg von dem Einlass 6 zu dem Auslass 7, so dass die erste Düse 9 mit Reinigungsflüssigkeit beaufschlagt werden kann. In einer solchen Arbeitsposition des Dichtelementes 13 gemäß Figur 5 erfolgt eine axiale Bewegung des großen Stellkolbens 17 in Richtung der Stirnfläche des Zylinderabschnitts 19. Dabei wird das erste Federelement 21 gedehnt und das zweite Federelement 22 gestaucht, so das nach Beendigung des Fördervorganges gemäß Figur 5 das Dichtelement 13 in die andere Endlage an der ersten Radialwandung 14 gemäß Figur 2 zurückkehren kann.

Somit erfolgt stets nach Abschalten der Pumpe 2 eine Änderung der Endlage des Dichtelementes 13. Auf diese Weise können die Düsen 9, 10 wechselweise mit einer Reinigungsflüssigkeit beaufschlagt werden.

Der Einlass 6 und die Auslässe 7, 8 sind axial versetzt zueinander angeordnet, wobei die Mittelachse des Einlasses 6 zwischen den Mittelachsen der Auslässe 7 und 8 angeordnet ist.

Das Dichtelement 13 ist tellerförmig angeordnet und weist in einem Außenrandbereich einen in axialer Richtung weisenden Dichtlippen 25 auf, der an den jeweiligen Radialwandungen 14, 24 zur Anlage kommt.

Der mittlere Verbreiterungsabschnitt 15 des Zylinders, in dem das Dichtelement 13 gelagert ist, weist eine geringere axiale Erstreckung auf als der Stellweg der Stellkolben 17, 18. Sofern das Dichtelement 13 als relativ dünne Membran ausgebildet ist, kann der mittlere Verbreiterungsabschnitt 15 weiter reduziert werden, so dass der Zylinder entsprechend kürzer ausgestaltet sein kann.

Der Raum zwischen den Stellkolben 17, 18 und den Stirnflächen der jeweils zugeordneten Zylinderabschnitte 19, 20 kann mit Luft gefüllt sein, die über eine Öffnung 26, 27 mit der Umgebung ausgetauscht werden kann.

Alternativ könnte die Stirnflächen des Zylinders auch verschlossen sein und der Zwischenraum zwischen den Stellkolben 17, 18 einerseits und den Stirnflächen der jeweils zugeordneten Zylinderabschnitte 19, 20 andererseits mit Flüssigkeit gefüllt sein. Für diesen Fall ist die Kolbenstange 16 mit einer Axialbohrung versehen zum Druckausgleich.

## Patentansprüche

1. Reinigungsanlage für Scheiben, insbesondere für Scheiben von Scheinwerfern für Kraftfahrzeuge, mit einer Pumpe zum Fördern einer Reinigungsflüssigkeit zu mindestens zwei jeweils im Bereich der Scheiben angeordneten Düsen und mit einem einen Einlass und mindestens zwei Auslässe aufweisenden Ventil, das in einem Zylinder einen axialbeweglichen Stellkolben aufweist, der mit einer Feder zusammenwirkt, dessen Federkraft einer Bewegung des Stellkolbens in Folge der Betätigung der Pumpe entgegenwirkt, **dadurch gekennzeichnet, dass** ein erster Stellkolben (17) und ein zweiter Stellkolben (18) über ein Koppelelement (16) miteinander verbunden sind, dass ein einen Druckraum (11, 12) begrenzendes Dichtelement (13) verschieblich zu dem Koppelelement (16) gelagert ist, dass der erste und/oder zweite Stellkolben (17, 18) jeweils über ein Federelement (21, 22) gegenüber dem Dichtelement (13) abgestützt ist, dass der Einlass (6) in einem solchen Bereich des Zylinders angeordnet ist, dass bei Druckbeaufschlagung des Zylinders eine Stellkraft auf den ersten und/oder zweiten Stellkolben (17, 18) und das Dichtelement (13) wirkt, und dass mit Erzeugen einer den ersten Stellkolben (17) und/oder zweiten Stellkolben (18) verschiebende Stellkraft das den ersten Stellkolben (17) und/oder zweiten Stellkolben (18) zugeordnete Federelement (21, 22) derart gespannt wird, dass es nach dem Nichtanliegen der Stellkraft auf das Dichtelement (13) mit einer Nachführkraft wirkt, die kleiner als die auf das Dichtelement (13) wirkende Stellkraft und entgegengesetzt zu derselben gerichtet ist.

2. Reinigungsanlage nach Anspruch 1, **dadurch gekennzeichnet, dass** das Koppelelement als Kolbenstange (16) ausgebildet ist, die den ersten Stellkolben (17) mit dem zweiten Stellkolben (18) starr miteinander verbindet.

3. Reinigungsanlage nach Anspruch 1 oder 2, **dadurch gekennzeichnet, dass** der erste Stellkolben (17) und/oder der zweiten Stellkolben (18) reibschlüssig in einem Zylinderabschnitt (19, 20) gelagert sind, wobei die Reibkraft derart hoch ist, dass das in dem den Förderweg freigebenden Druckraum (11, 12) befindliche Federelement (21, 22) abgestützt ist zum Festlegen des Dichtelementes (13) in einer Endlage.

4. Reinigungsanlage nach einem der Ansprüche 1 bis 3, **dadurch gekennzeichnet, dass** das Dichtelement (13) in axialer Richtung zwischen dem ersten Stellkolben (17) und dem zweiten Stellkolben (18) koaxial verschiebbar ist.

5. Reinigungsanlage nach einem der Ansprüche 1 bis 4, **dadurch gekennzeichnet, dass** das Dichtelement (13) tellerförmig ausgebildet ist und mit jeder Druckbeaufschlagung wechselweise mit einem Außenrandbereich an einer Innenwandung eines Verbreiterungsabschnitts (15) des Zylinders angedrückt ist.

6. Reinigungsanlage nach einem der Ansprüche 1 bis 5, **dadurch gekennzeichnet, dass** der Einlass (6) und die Auslässe (7, 8) parallel zueinander verlaufen, wobei die Auslässe (7, 8) in einem gleichen axialen Abstand zu dem Einlass (6) angeordnet sind.

7. Reinigungsanlage nach einem der Ansprüche 1 bis 6, **dadurch gekennzeichnet, dass** der erste Stellkolben (17) und der zweite Stellkolben (18) jeweils tellerförmig mit nach außen abgeschrägten Randstegen (23) ausgebildet sind zur reibschlüssigen Anlage an den Innenwandungen der Zylinderabschnitte (19, 20).

8. Reinigungsanlage nach einem der Ansprüche 1 bis 7, **dadurch gekennzeichnet, dass** während der Druckbeaufschlagung das jeweils in einem geschlossenen Druckraum (11, 12) befindliche Federelement (21, 22) gestaucht und dass das jeweils in einem offenen Druckraum (11, 12) befindliche zweite Federelement (21, 22) entspannt ausgebildet ist.

9. Reinigungsanlage nach einem der Ansprüche 1 bis 8, **dadurch gekennzeichnet, dass** das Dichtelement (13) als Membran ausgebildet ist.

10. Reinigungsanlage nach einem der Ansprüche 1 bis 9, **dadurch gekennzeichnet, dass** die Stellkolben (17, 18) eine unterschiedliche große wirksame Stellfläche aufweisen.

11. Reinigungsanlage nach einem der Ansprüche 1 bis 10, **dadurch gekennzeichnet, dass** der Druckausgleich zwischen den durch die Stellkolben (17, 18) einerseits und den Stirnflächen der Zylinderabschnitten (19, 20) andererseits über eine Verbindung mit der Umgebung oder mittels einer hohl ausgebildeten Kolbenstange (16) erfolgt.

12. Reinigungsanlage nach einem der Ansprüche 1 bis 11, **dadurch gekennzeichnet, dass** die Federelemente (21, 22) in der äußeren Endlage durch einen Morsekegel, Saugnäpfe, Magneten oder durch mechanische Verrastung abgestützt sind.
